# EUROPEAN PATENT APPLICATION

(11) **EP 1 850 591 A2**
(43) Date of publication of application: **31.10.2007**
(21) Application number: 07106965.2
(22) Date of filing: 25.04.2007
(51) Int. Cl.: H04N 7/14

(54) **Broadcast receiver and method for transmitting reception status of broadcast receiver**

(30) Priority: 26.04.2006 KR 20060037782
(71) Applicant: LG Electronics Inc., Seoul 150-721 (KR)
(72) Inventor: Cha, Sang Hoon, 120-830, SEOUL (KR)
(74) Representative: Cabinet Plasseraud

(57) **Abstract**

A broadcast receiver and a method for transmitting status information of the broadcast receiver are disclosed. The broadcast receiver transmits status information of a DVR function to a broadcast transmission terminal via a network management unit. The network management unit may be any one of a Common Management Information Protocol (CIMP), a Remote Network Monitoring (RMON), and a Simple Network Management Protocol (SNMP), etc. The status information may be defined in the form of MIB structure. The defined data may be communicated between the broadcast receiver and the broadcast transmission terminal according to a network management protocol. Therefore, the broadcast receiver can monitor the status information of the storage unit, and can transmit broadcast data or program to prevent the problems from being generated.

## Description

This application claims the benefit of Korean Patent Application No. 10-2006-0037782, filed on April 26, 2006, which is hereby incorporated by reference as if fully set forth herein.

### BACKGROUND OF THE INVENTION

### Field of the Invention

This document relates to a broadcast receiver, and a method for transmitting a reception status of the broadcast receiver.

### Discussion of the Related Art

Typically, with the increasing development of data broadcast technology, a broadcast system for receiving broadcast data has been changed to a bi-directional interactive broadcast system. In this case, the bi-directional interactive broadcast system is indicative of a specific broadcast system capable of transmitting information of a broadcast program, which has been received in or is to be received in a broadcast receiver or TV viewer.

For the convenience of description, a specific system including a cable card to receive cable broadcast data is referred to as a host. The set of the host and the cable card is referred to as a broadcast receiver. Also, if a specific host is not connected to the cable or receives cable broadcast data without using the cable card, only the host is referred to as a broadcast receiver.

Hosts may be a variety of devices, or be connected to the devices, such that the hosts for receiving broadcast signals or data may have different functions and states. Therefore, if the broadcast transmission terminal transmits broadcast signals or data without transmitting the function-information or status information of the hosts, the broadcast signals or data to be transmitted cannot be normally transmitted to a destination, resulting in the occurrence of data transmission errors.

### SUMMARY

Accordingly, this document is directed to a broadcast receiver and a method for transmitting reception status information of the broadcast receiver, that substantially obviate one or more problems due to limitations and disadvantages of the related art.

An object of the present invention is to provide a broadcast receiver capable of transmitting function- or status- information of a host to a broadcast transmission terminal, a method for transmitting status information, and a data structure of the status information.

Another object of the present invention is to provide a broadcast receiver for transmitting status information of a host including a DVR (Digital Video Recorder) function to a broadcast transmission terminal, a method for transmitting status information, and a data structure of the status information.

Yet another object of the present invention is to provide a broadcast receiver for allowing a broadcast transmission terminal to remotely monitor a DVR function of a host, and a method for transmitting status information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a broadcast receiver and a method for transmitting status information of the broadcast receiver are disclosed. The broadcast receiver transmits status information of a DVR function to a broadcast transmission terminal via a network management unit. The network management unit may be any one of a Common Management Information Protocol (CIMP), a Remote Network Monitoring (RMON), and a Simple Network Management Protocol (SNMP), etc. The status information may be defined in the form of MIB structure. The defined data may be communicated between the broadcast receiver and the broadcast transmission terminal according to a network management protocol. Therefore, the broadcast receiver can monitor the status information of the storage unit, and can transmit broadcast data or program to prevent the problems from being generated.

And, the status information may be defined in the form of the MIB structure, and the defined data may be communicated between the broadcast receiver and the broadcast transmission terminal according to the network management protocol.

Therefore, the broadcast transmission terminal can monitor status information of the storage unit of the broadcast receiver, and may transmit broadcast data or broadcast program to prevent the problems of the broadcast receiver.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the examples and are incorporated in and constitute a part of this application, illustrate implementation and together with the description serve to explain the principle of the example. In the drawings:

FIG. 1 is a conceptual diagram illustrating a cable broadcast network system including a broadcast host and a cable card;

FIG. 2 is a conceptual diagram illustrating a method for communicating information between a Simple Network Management Protocol (SNMP) management server and a SNMP server;

FIGS. 3A to 3E exemplarily show a variety of status information capable of being transmitted to a cable headend via a network management unit by a broadcast receiver;

FIGS. 4A to 4C are conceptual diagrams illustrating a communication method defined in the SNMP scheme;

FIG. 5 is a data structure of reception status information;

FIGS. 6A to 6F exemplarily show a variety of status information capable of being transmitted to a cable headend via a network management unit by a broadcast receiver;

FIG. 7 is a block diagram illustrating a broadcast receiver; and

FIG. 8 is a flow chart illustrating a method for transmitting status information of a broadcast receiver.

### DETAILED DESCRIPTION OF THE INVENTION

Reference will now be made in detail to the examples of which are illustrated in the accompanying drawings. Wherever possible, the same reference numbers will be used throughout the drawings to refer to the same or like parts.

It should be noted that a broadcast receiver and a method for transmitting status information can transmit status information of the broadcast receiver to a transmission terminal (also called a transmitting terminal) according to a network management unit.

The network management unit generically names a protocol or temporary rule, which can prevent overload of network traffic data from being generated, can prevent network problems caused by various reasons from being generated, can effectively find out the reason of a faulty operation, and can restore to a normal status.

For example, the network management unit may be any one of a Common Management Information Protocol (CIMP), a Remote Network Monitoring (RNM), and a Simple Network Management Protocol (SNMP), etc.

The above-mentioned network management unit can manage a network, and can recognize status information of various devices connected to the network at a remote site in real time.

The network management unit can monitor status information of the broadcast receiver and a connection status between a host and other peripheral devices.

In the case of monitoring the status information of the broadcast receiver, information of the broadcast receiver is referred to as "status information" herein.

The status information is indicative of a general term of both an operation status of the broadcast receiver and a connection status between the broadcast receiver and peripheral devices.

For the convenience of description and better understanding, the SNMP protocol from among the above-mentioned network management units (i.e., CIMP, RNM, and SNMP) will hereinafter be described with reference to the annexed drawings, however, it should be noted that the scope of the examples is not limited to the SNMP and is applicable to other examples as necessary.

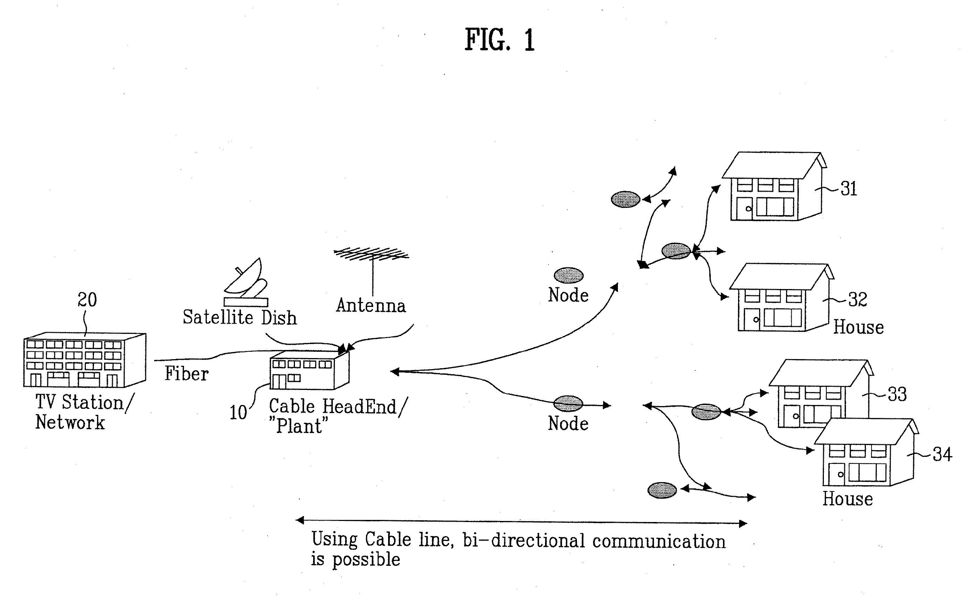

FIG. 1 is a conceptual diagram illustrating an exemplary bi-directional broadcast system. In more detail, FIG. 1 is a conceptual diagram illustrating a cable broadcast network system including a broadcast receiver equipped with a cable card.

The cable headend 10 or the plant 10 can receive broadcast signals from the TV station 20 over a variety of communication networks. The cable headend 10 can transmit broadcast data received over a network including at least one node to the hosts 31, 32, 33, and 34 of a cable broadcast receiver.

The hosts 31, 32, 33, and 34 or cable card contained in the cable broadcast receiver may receive or transmit broadcast signals from/to the cable headend 20 over the cable network.

The hosts 31, 32, 33, and 34 may be digital TVs, DVDs (Digital Versatile Discs), digicams (digital camera), and set-top boxes, etc. Otherwise, the hosts 31, 32, 33, and 34 may be other devices, which are connected to the digital TVs, DVDs (Digital Versatile Discs), digicams, and set-top boxes via a variety of interfaces. The broadcast transmission terminal and the host may receive/transmit data over a variety of networks such as a cable network shown in FIG. 1.

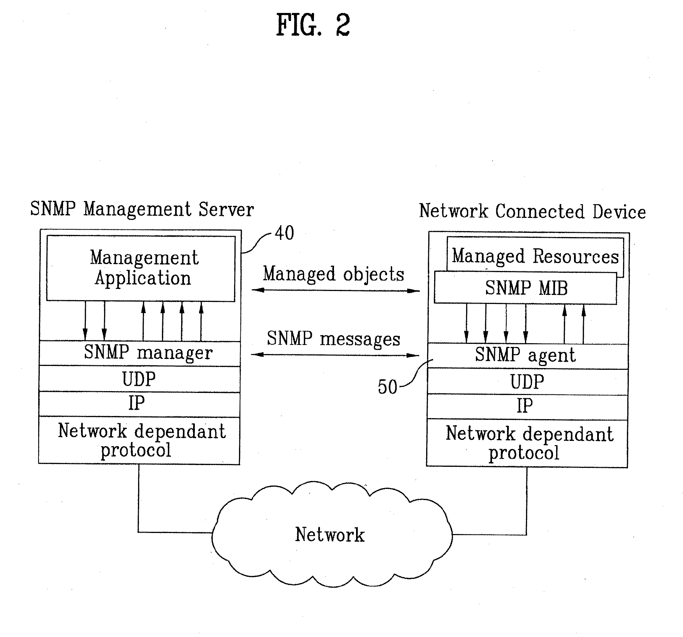

FIG. 2 is a conceptual diagram illustrating a method for communicating information between a Simple Network Management Protocol (SNMP) management server and a SNMP server. The concept of the SNMP is shown in FIG. 2.

Referring to FIG. 2, the SNMP can be available in all kinds of network environments, each of which uses a Transmission Control Protocol / Internet Protocol (TCP/IP). The SNMP management server 40 may be connected to a variety of devices connected to a network-connected device 50 over a wired/wireless network.

The SNMP management server 40 may be a broadcast transmission terminal capable of transmitting broadcast data. The network-connected device 50 may be a broadcast transmission terminal for transmitting broadcast data. The network-connected device 50 may be a broadcast receiver. The SNMP management server 40 can acquire status information of the network-connected device 50 using a SNMP manager.

In this case, the status-information request or the status-information response is modified according to a TCP/IP such as a User Datagram Protocol (UDP) or Internet Protocol (IP), such that it is transmitted to a destination via a network dependent protocol of a physical layer.

The network-connected device 50 can receive the status-information request, and can transmit the status information according to a predetermined format. The network-connected device 50, which desires to transmit the status information to the SNMP management server 40, can transmit the status information represented by a data structure called a Management Information Base (MIB).

For this purpose, the broadcast receiver 20 may include a SNMP agent for transmitting a variety of status information represented by the data structure to the SNMP management server 10 located at a remote site.

In this case, the SNMP agent generically names a device or application capable of interfacing the MIB data with a network-associated protocol such as a UDP/IP.

For the convenience of description, it is assumed that the broadcast transmission terminal is a cable headend, the broadcast receiver is a cable broadcast receiver, and the network is a cable broadcast system for a cable broadcast network. However, it should be noted that the example is not limited to the cable broadcast system, and is also applicable to a bi-directional broadcast system as necessary.

The above-mentioned cable broadcast system will hereinafter be described with reference to the annexed drawings.

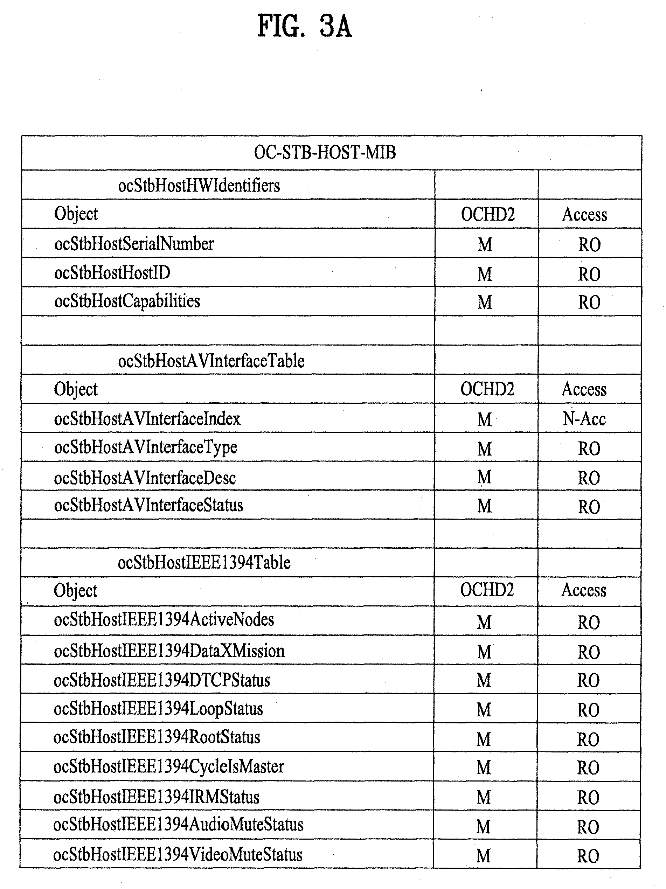

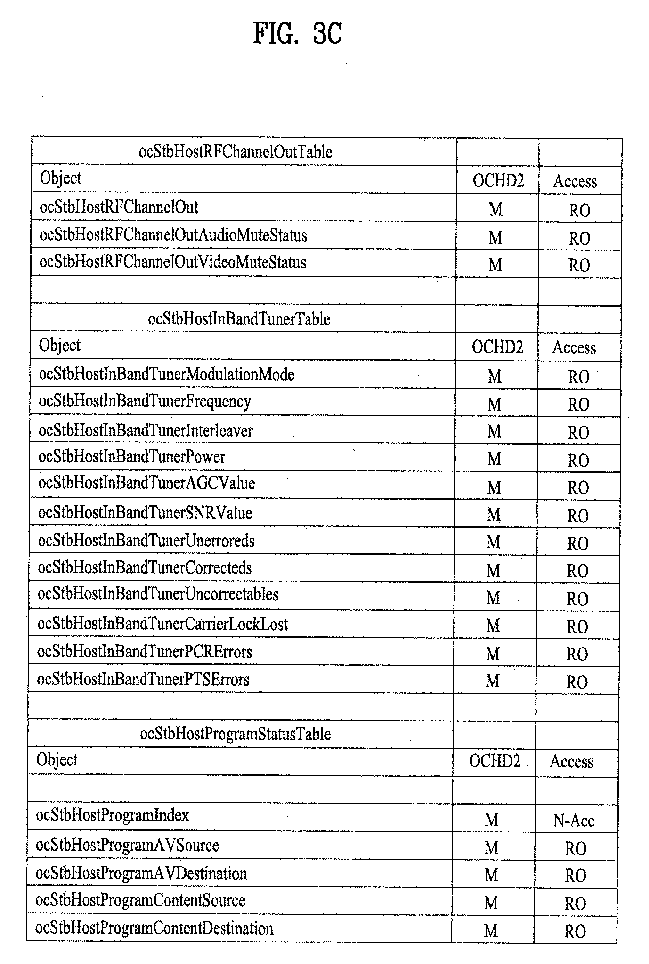

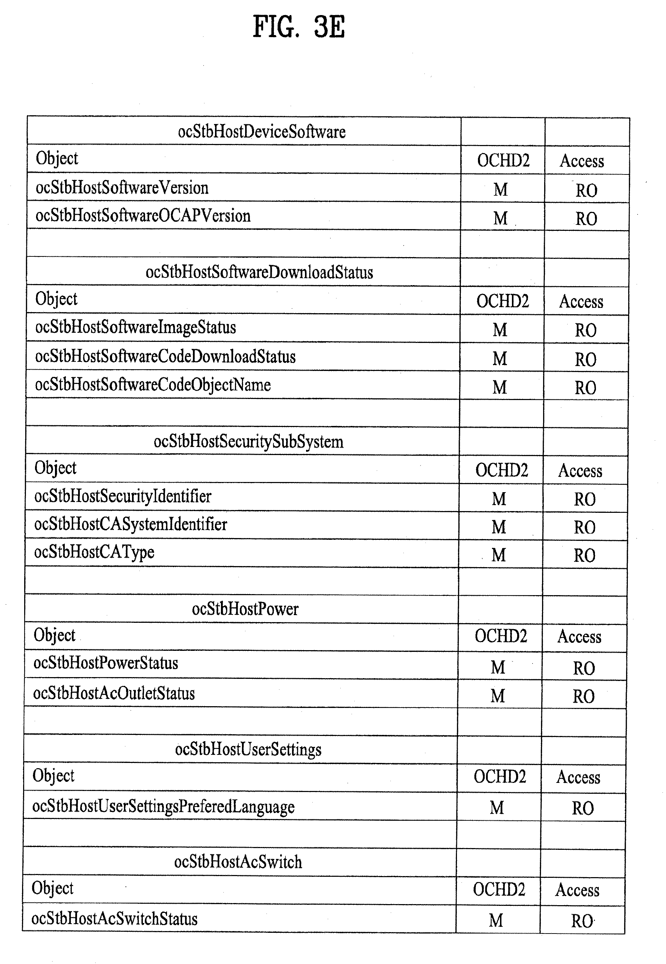

FIGS. 3A to 3E exemplarily show a variety of status information capable of being transmitted to a cable headend via a network management unit by a broadcast receiver.

In FIGS. 3A to 3E, the status information is configured in the form of the MIB data structure, and is then transmitted to a destination. FIGS. 3A to 3E show a variety of information capable of being defined by the MIB data. For the convenience of description, the above-mentioned information defined by the MIB data is distributed to FIGS. 3A to 3E.

Referring to FIG. 3A, "ocstbHostHWIdentifiers" is indicative of information of a unique number of a host, "ocstbHostAVInterfaceTable" is indicative of interface information of the host, and "ocstbHostIEEE1394Table" indicates a connection status established when the host is connected according to the IEEE 1394 protocol.

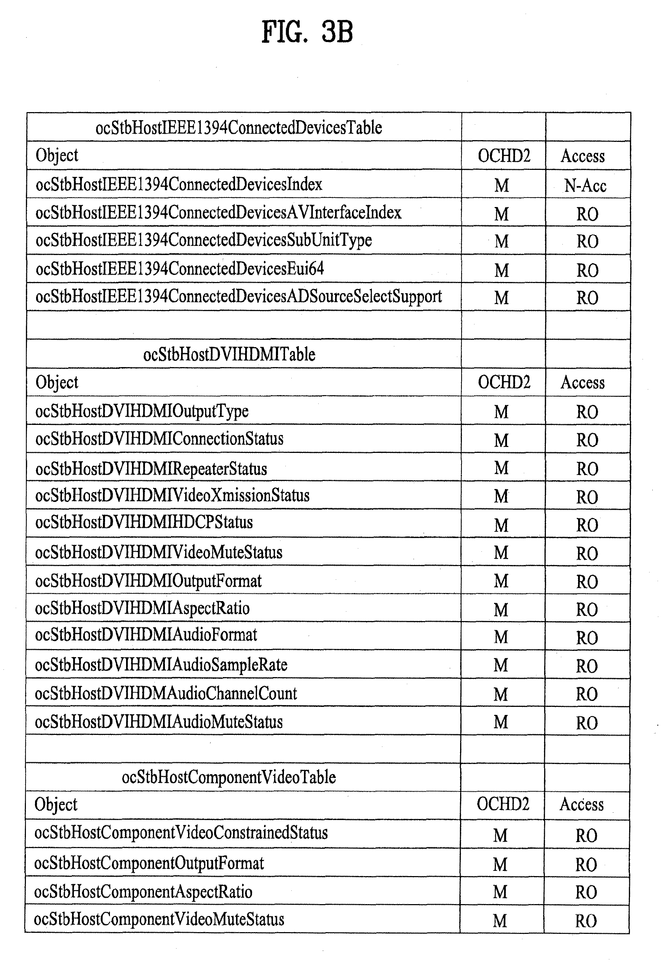

Referring to FIG. 3B, "ocstbHostIEEE1394ConnectedDevicesTable" is indicative of information associated with the device connected according to the IEEE 1394 protocol. "ocstbHostDVIHDMITable" includes status information indicating that a Digital Video Interactive (DVI) or High Definition Multimedia Interface (HDMI) signal is applied to the host.

Referring to FIG. 3C, "ocstbHostRFChannelOutTable" is indicative of specific information indicating whether the host can perform a Radio Frequency (RF) output function. "ocstbHostInBandTunerTable" is indicative of specific information associated with a RF channel frequency. "ocstbHostProgramStatusTable" is indicative of I/O (Input/Output) - associated information of a currently-received broadcast stream.

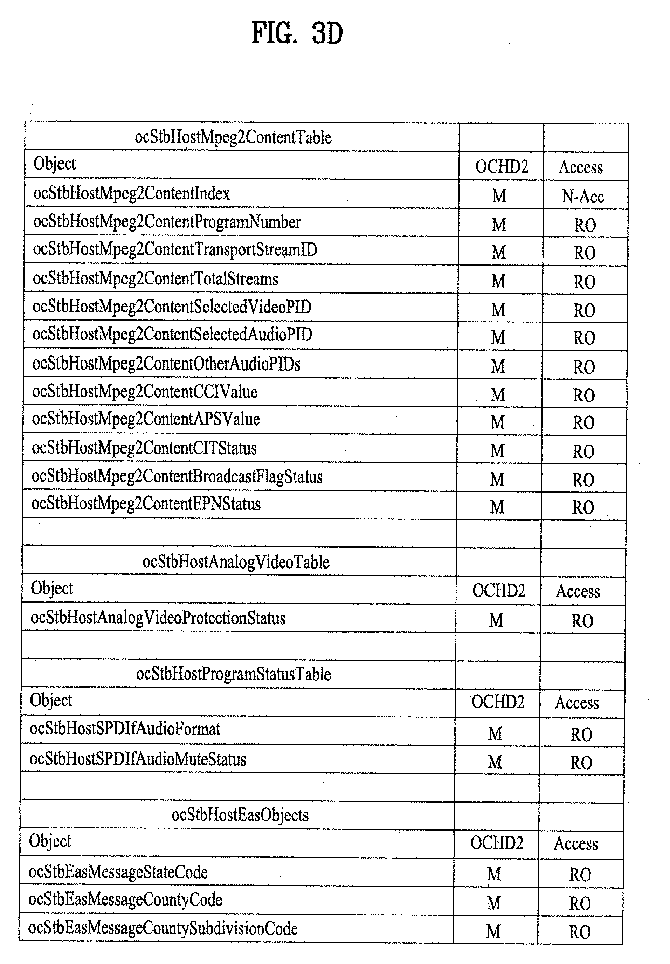

Referring to FIGS. 3D **to** 3E, object identifiers are indicative of examples of the status information associated with the cable headend receiver, and each object identifier may be defined by the MIB data structure.

The reference character "M" of FIGS. 3A to 3E is indicative of a mandatory item compulsorily defined in the specification associated with the cable-broadcast MIB data. The reference character "RO" indicates that the cable headend has only the read-only authority by which the cable headend can read corresponding status information of the cable broadcast receiver. The reference character "N-Acc" is indicative of a not-accessible status indicating that the cable headend cannot access the corresponding status information.

In this way, the cable headend defines the MIB data structure, and can transmit the above-mentioned information to the cable headend according to the SNMP scheme.

From the viewpoint of the MIB data structure, the cable headend may serve as the SNMP management server, and the cable broadcast receiver may serve as the SNMP agent.

Object communication between the SNMP management server and the SNMP agent may be classified into the three concepts. FIGS. 4A to 4C show detailed description of the above-mentioned three concepts.

The communication concept defined in the SNMP will hereinafter be described with reference to FIGS. 4A to 4C.

FIG. 4A shows the first concept capable of allowing the management server to receiver information from the agent. The management server may acquire status information of a corresponding device via the agent (i.e., get operation status), or may set a specific value of the status information (i.e., set operation status).

If the management server requests specific information from the agent, the agent determines whether a corresponding object is managed by the agent itself, and replies to the determined result.

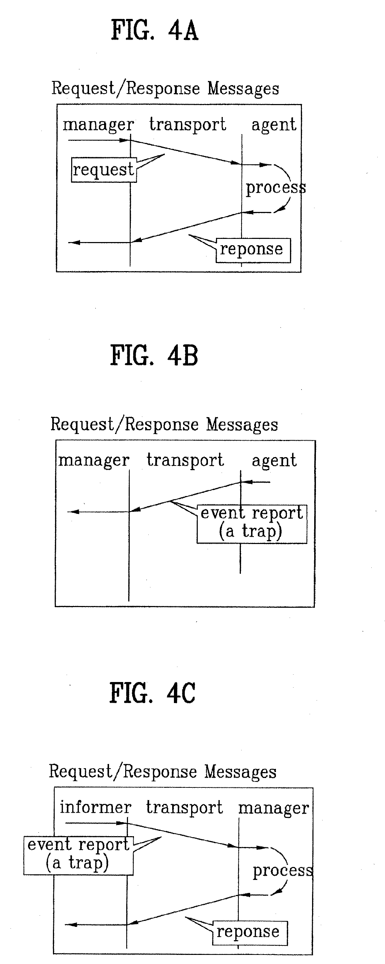

FIG. 4B is a conceptual diagram illustrating the second concept for allowing the management server to communicate with the agent.

Referring to FIG. 4B, if a corresponding device has a certain event, the agent may inform the management server of the status information associated with the event. This action is called a trap operation. The management server receives the status information, and properly process the device using the received status information.

The SNMP defines an informer indicative of other objects other than the management server.

FIG. 4C is a conceptual diagram illustrating the third concept for allowing the informer to communicate with the management server.

Referring to FIG. 4C, the informer informs the management server of a certain event (i.e., event report), and the management server may transmit a response associated with the event to the informer. According to a communication method based on the SNMP, if the broadcast receiver defines the SNMP agent and the MIB data structure, the broadcast receiver may transmit status information to be transmitted to a destination at a specific time desired by the management server.

In the meantime, the DVR (Digital Video Recorder) has been widely used as a broadcast receiver for receiving/displaying broadcast signals, and the broadcast transmission terminal has also been used as a representative example of the broadcast receiver.

In this case, the DVR generically names all the hardware/software platforms, each of which can store digital video content data by the user. Therefore, the term "DVR" may include a set-top box, a digital TV set, and a personal video recorder (PVR), etc.

The DVR is indicative of a middleware capable of driving a digital software program using the broadcast receiver as hardware. The DVR also includes the concept of the OCAP (OpenCable Application Platform) - DVR. If the broadcast receiver has the DVR function, it is preferable that the broadcast transmission terminal may recognize or monitor status information of the DVR function of the broadcast receiver.

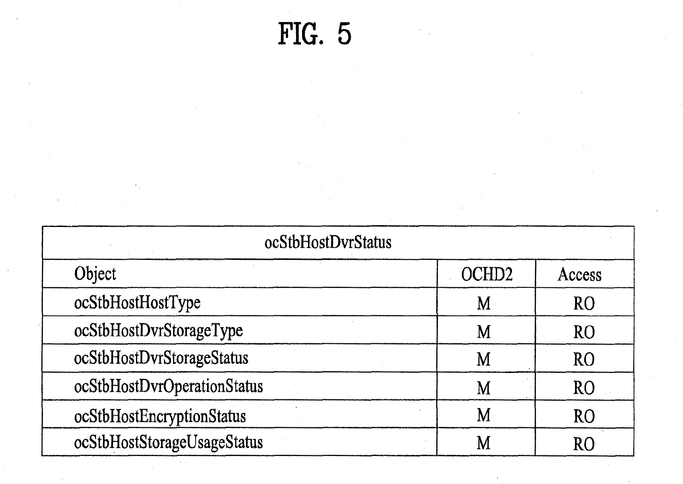

FIG. 5 illustrates data structure of reception status information.

A method for transmitting status information and a data structure of the status information will hereinafter be described with reference to FIG. 5.

The status information of the broadcast receiver may be transmitted to the network management unit using the SNMP. In order to implement the method for transmitting reception status information, the MIB data structure may be defined in the same manner as the SNMP status information shown in FIGS. 3A to 3E.

FIG. 5 shows the MIB data structure, which is defined by the broadcast receiver and is associated with information of the DVR function of the broadcast receiver.

For the convenience of description, it is assumed that the broadcast transmission terminal includes the SNMP management server and the broadcast receiver can serve as the SNMP agent.

The status information of the DVR function of the broadcast receiver indicates whether the DVR function of the broadcast receiver is operated. The status information of the DVR function of the broadcast receiver includes any one of information indicating which kind of the DVR function is operated, information indicating category information of a storage unit for the DVR function, information indicating physical status information of the storage unit for the DVR function, information indicating operation status information of the DVR function, information indicating whether content data stored by the DVR function is encrypted or not, and information indicating currently-used storage capacity of the storage unit.

In FIG. 5a, "ocstbHostHostType" indicates whether the broadcast receiver performs the DVR function. If the broadcast receiver has the DVR function, the "ocstbHostHostType" information indicates which kind of DVR function can be executed by the broadcast receiver.

A representative example of the "ocstbHostHostType: information can be defined as follows:

0x00 = no DVR Host (i.e., there is no DVR function in the host, or no relation to the DVR device);
0x01 = has OCAP(OpenCable Application Platform)-DVR function (i.e., broadcast receiver has the OCAP-DVR function);
0x02 = has native DVR function (i.e., the broadcast receiver has a unique DVR function of a manufacturing company of the broadcast receiver itself);
0x03 = other type of DVR (i.e., other DVR functions other than the OCAP (OpenCable Application Platform) - DVR and native DVR); and
0x04 ~ 0xFF reserved (undefined).

If the broadcast receiver has no DVR function on the condition that the "ocstbHostHostType" value has "0x00", other information may be set to unknown values.

An example of the "ocstbHostDvrStorageType" information can be defined as follows:

0x00 = Unknown (i.e., no DVR function);
0x01 = internal HDD (i.e., internal Hard Disc Drive (HDD));
0x02 = external HDD (i.e., external Hard Disc Drive (HDD));
0x03 = flash (i.e., flash memory);
0x04 = memory card
0x05 = other type of memory; and
0x06 ~ 0xFF reserved (undefined).

The "ocstbHostDvrStorageStatus" value is indicative of status information of a storage unit connected to the broadcast receiver.

An example of the "ocstbHostDvrStorageStatus" value can be defined as follows:

0x00 = Unknown (i.e., no DVR function);
0x01 = status OK (i.e., normal status of the storage unit);
0x02 = not formatted (i.e., unformatted storage unit);
0x03 = has bad sector (i.e., bad sector exists in the storage unit);
0x04 = out of order (i.e., faulty operation of the storage unit); and
0x05 ~ 0xFF reserved (undefined).

The "ocstbHostDvrOperationStatus" value is indicative of an operation status of a DVR function contained in the broadcast receiver or an operation status of other DVR functions supported by the broadcast receiver. The representative example of the "ocstbHostDvrOperationStatus" value can be defined as follows:

0x00 = Unknowm (i.e., no DVR function);
0x01 = no active operation (i.e., OFF status of the DVR function);
0x02 = time shift operation is enabled (i.e., time shift is operating);
0x03 = recording operation is enabled (i.e., recording function is operating); and
0x04 ~ 0xFF reserved (undefined).

The time shift function (also called the time shift operation) indicates that the broadcast receiver temporarily selects a currently-received event, interrupts the received event, or reproduces the received event. The above-mentioned time shift function is distinguished from the recording operation, which stores the event such that the user can select or view the event at a later time after the event reception has been terminated.

The "ocstbHostEncryptionstatus" information indicates whether the content data recorded/stored by the DVR is encrypted such that the encrypted content data is stored in the storage unit.

An example of the "Encryption_status" value may be the "ocstbHostDvrStorageStatus" value. The "ocstbHostDvrStorageStatus" value can be defined as follows:

0x00 = Unknown (i.e., no DVR function);
0x01 = not encrypted (i.e., no encryption); and
0x02 = encrypted (i.e., encryption).

The "ocstbHostUsagestatus" information defines a usage status of the storage unit. An example of the "Usage_status" value can be defined as follows:

0x00 = Unknown (i.e., no DVR function);
0x01 = empty (i.e., empty storage unit);
0x02 = under 25% is used (i.e., usage amount of the storage unit is less than 25%);
0x03 = under 50% is used (i.e., usage amount of the storage unit is less than 50%);
0x04 = under 75% is used (i.e., usage amount of the storage unit is less than 75%);
0x05 = disk full (i.e., all of maximum storage capacity of the storage unit is used); and
0x06 ~ 0xFF reserved (undefined).

The usage status information of the storage unit may be represented in other units (e.g., byte units). It should be noted that category information of the status information of the DVR function and the value of the status information have been disclosed for illustrative purposes, those skilled in the art will appreciate that various modifications, additions and substitutions are possible, without departing from the scope and spirit of the invention.

If the broadcast transmission terminal has the SNMP management server, the status information of the DVR function of the broadcast receiver equipped with the SNMP agent may be received or transmitted from/to the MIB (Management Information Base) data.

If the broadcast transmission terminal including the SNMP management server transmits the request message shown in FIG. 4A, the status information shown in FIG. 5 indicates that the broadcast receiver collects status information of the request message and transmits a response message to the broadcast transmission terminal.

Although the broadcast receiver does not receive the request message, the status information shown in FIG. 5 indicates that the broadcast receiver periodically transmits the request message to the broadcast transmission terminal, or unilaterally transmits the request message to the broadcast transmission terminal via the trap message based on the event of the broadcast receiver.

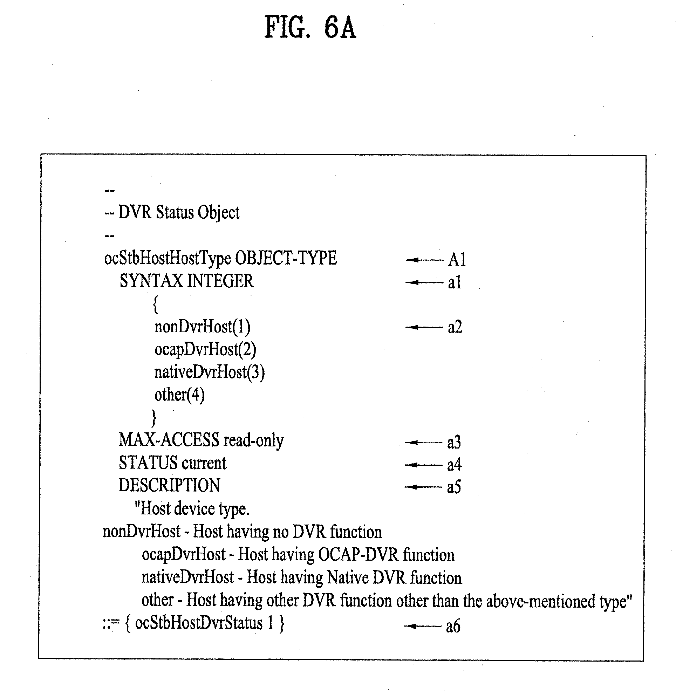

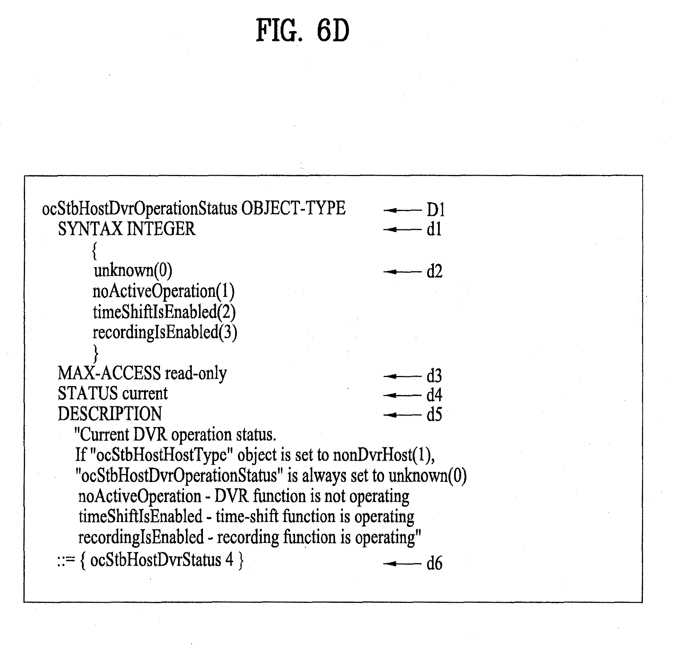

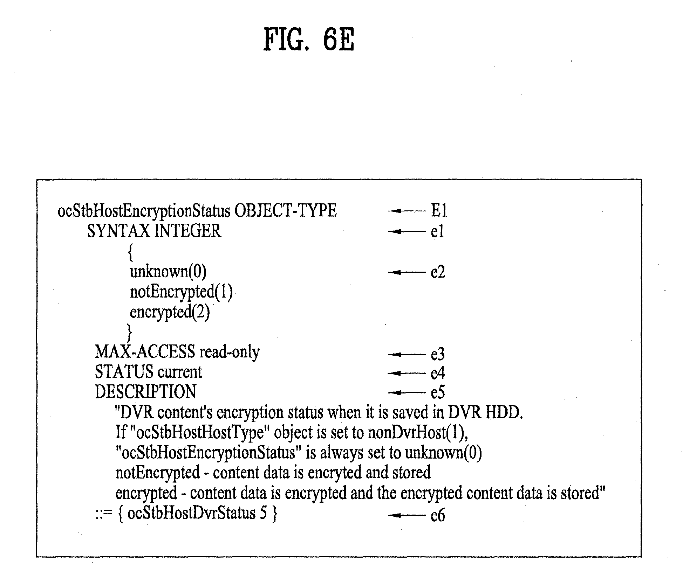

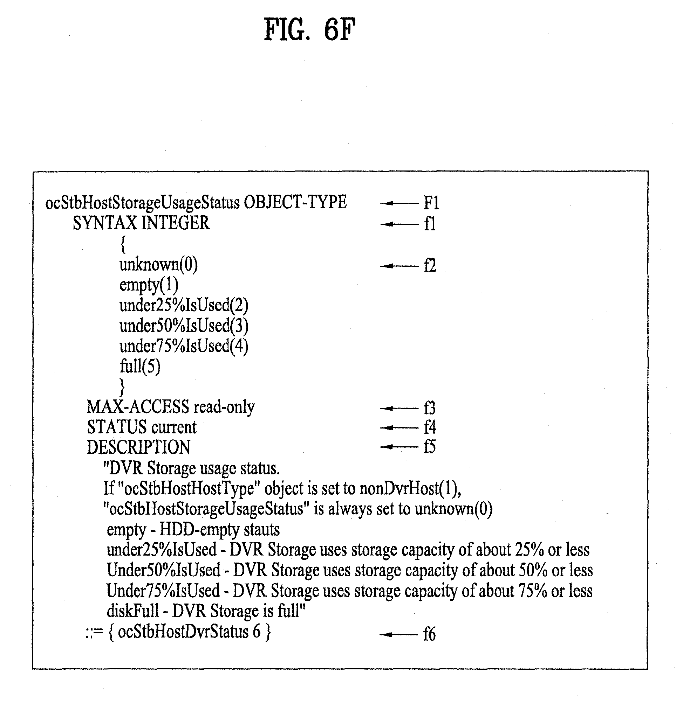

FIGS. 6A to 6F exemplarily show a variety of status information capable of being transmitted to a cable headend via a network management unit by a broadcast receiver. In more detail, FIGS. 6A~ 6F exemplarily show the Structure of Management Information (SMI) syntax acquired when the example of FIG. 5 is defined by the MIB data structure. For the convenience of description, the SMI syntax is divided into FIGS. 6A~6F, such that the successive SMI syntax is shown in FIGS. 6A~ 6F. The SNMP status information can be defined as objects of the MIB data structure using the SMI syntax.

The exemplary data structure of the status information will hereinafter be described with reference to FIGS. 6A to 6F.

Specific information (A1) indicating whether the broadcast receiver has the DVR function or which one of DVR functions is contained in the broadcast receiver may be defined by an integer type (a1). According to the "a2" information, the "nonDVrHost" information of the "a2" indicates that there is no DVR function in the host or the host is not related to the DVR device, the "ocapDvrHost" information of the "a2" indicates that the broadcast receiver has the OCAP-DVR function. In addition, the "a2" information indicates whether the broadcast receiver has an unique DVR function of a manufacturing company of the broadcast receiver itself, and may indicate whether the broadcast receiver has other DVR functions other than OCAP-DVR or native DVR. The above-mentioned information may be defined as read-only information, as denoted by "a3". The data structure of the status information may define transmission of the value of a current status as denoted by "a4", and may add description of the data as denoted by "a5".

However, the above-mentioned data may be positioned at other locations, it can also be defined in another data structure capable of defining additional DVR status information. According to the example of FIG. 6A, specific information indicating which one of DVR functions is contained in the broadcast receiver is positioned at a first location of the data structure in which the DVR status information is defined.

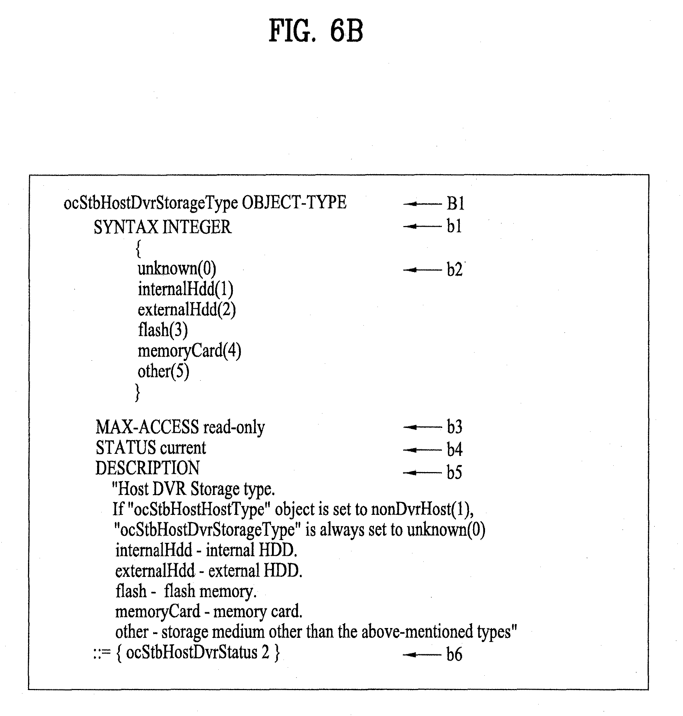

Referring to the example of FIG. 6B, the data structure in which the DVR status information is defined may include category information of the storage unit, which is contained in the broadcast receiver for the DVR function, as denoted by "B1".

Referring to FIG. 6B, the data structure for category information of the storage unit indicates the type of an information value indicating category information of the storage unit, as denoted by "b1". The "b2" information indicates which kind of storage unit is contained in the broadcast receiver. The "b3" information indicates that the information is defined as a read-only authority. The "b4" information indicates transmission of a current status value. The "b5" information may additionally define the description of individual values.

The category information of the storage unit for the DVR function may be positioned at a second location of the data structure in which the DVR status information is defined, as denoted by "b6".

The status information C1 of the storage unit connected to the broadcast receiver. The "D1" information indicates either the operation status information of the DVR function contained in the broadcast receiver or the operation status information of the DVR function supported by the broadcast receiver. The "E1" information indicates that content data recorded/stored by the DVR is encrypted so that the encrypted content data is stored in the storage unit. The "F1" information indicates a usage status of the storage unit. The MIB data structure may include the "C1", "D1", "E1", and "F1" information.

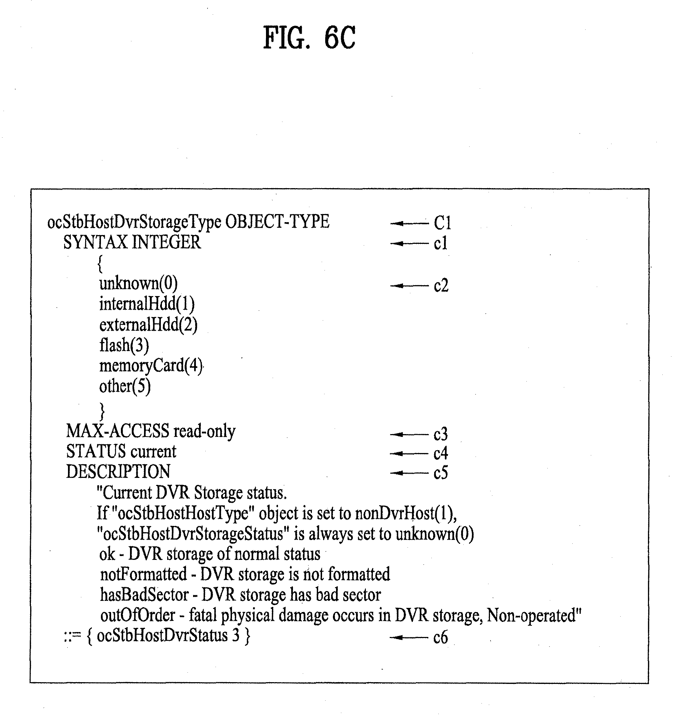

FIGS. 6C **to** 6F show examples in which the above-mentioned status information is defined as third, fourth, fourth, and sixth data of the data structure.

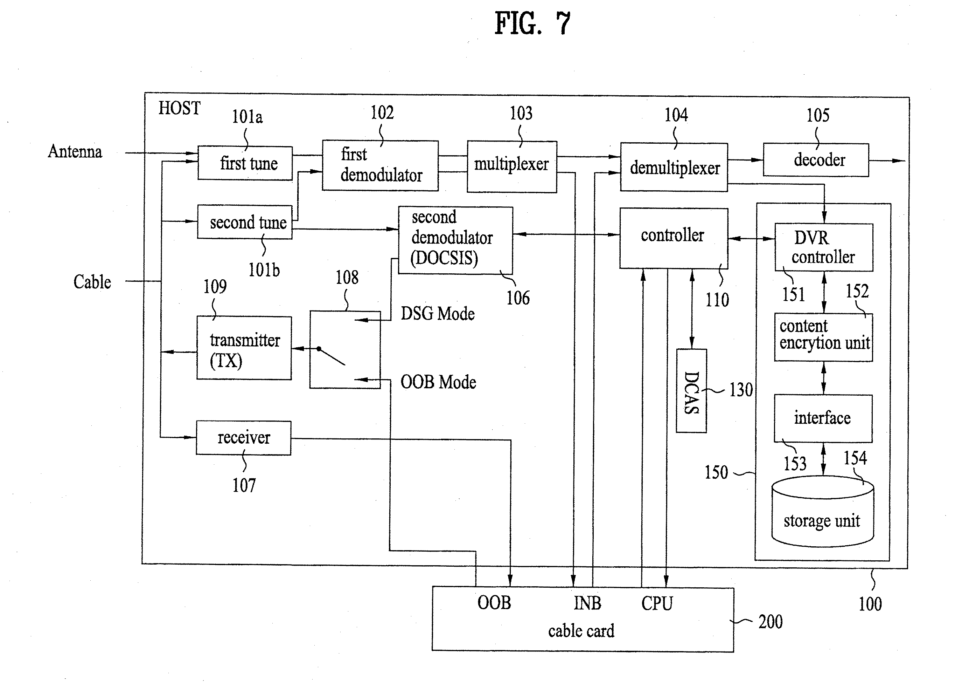

FIG. 7 is a block diagram illustrating a broadcast receiver. In more detail, FIG. 7 shows an example of a cable broadcast receiver.

Referring to FIG. 7, if the broadcast receiver is a cable broadcast receiver, the cable broadcast receiver may include the host 100 and the cable card detachably connected to the host.

If the broadcast receiver is not equal to the cable broadcast receiver, only the host may serve as the broadcast receiver. The host 100 may receive only cable broadcast signals, or may include at least one of a cable broadcast signal, a terrestrial broadcast signal, and a satellite broadcast signal. In other words, the host 100 indicates an example capable of receiving at least one of the cable broadcast signal, the terrestrial broadcast signal, and the satellite broadcast signal.

In the meantime, FIG. 7 shows a bi-directional communication method between a cable broadcast receiver and a cable headend (i.e., a broadcast transmission terminal). In more detail, FIG. 7 shows a cable broadcast receiver capable of an OOB (Out Of Band) scheme and a DSG (DOCSIS Settop Gateway) scheme. The host can receive broadcast signals or can transmit the broadcast signals to the broadcast transmission terminal.

The OOB scheme is indicative of a specific standard in which a transmission standard between the cable headend and the set-top box is defined. The DSG scheme indicates a communication method between the cable modem control system of the cable headend and the DOCSIS-based cable modem contained in the cable broadcast receiver.

The DOCSIS is indicative of a digital cable TV standard selected by the Cablelaps indicative of the USA cable broadcast standard certification institutes. According to the DOCSIS scheme, data can be transmitted to a destination using the cable modem.

FIG. 7 shows a cable broadcast receiver in which the OOB scheme and the DSG scheme are mixed. However, it should be noted that the cable broadcast receiver of FIG. 7 has been disclosed for illustrative purposes.

The broadcast receiver of FIG. 7 may include the host 100 and the cable card 200. The host 100 includes a first tuner 101a, a second tuner 101b, a first demodulator 102, a multiplexer 103, a demultiplexer 104, a decoder 104, a second demodulator (DOCSIS demodulator) 106, a receiving unit 107, a switch 108, a transmitting unit 109, a controller 110, and a DVR block 150.

The first tuner 101a tunes a specific channel frequency from among terrestrial audio/video (A/V) broadcast signals or a specific channel frequency from among cable audio/video (A/V) broadcast signals acting as in-band signals transmitted via the cable line, such that the turned resultant signal may be transmitted to the first demodulator 102.

The terrestrial broadcast scheme and the cable broadcast scheme may have different transmission schemes. The first demodulator 102 may perform another demodulation process in association with signals having different modulation schemes.

Provided that the terrestrial A/V broadcast signals are modulated into other signals according to the Vestigial Sideband Modulation (VSB) scheme, and the cable A/V broadcast signals are modulated into other signal according to the Quadrature Amplitude Modulation (QAM) scheme, the first demodulator 102 may modulate the signals according to the VSB scheme upon receiving the selection signal of the first tuner 101a, or may modulate the signals according to the QAM scheme upon receiving the selection signal of the first tuner 101a.

The demodulated signals of the first demodulator 102 may be multiplexed by the multiplexer 103, such that the cable broadcast signal is transmitted to the cable card 200 and the terrestrial broadcast signal is transmitted to the demultiplexer 104.

The example of FIG. 7 shows a specific case in which the cable card 200 can process the multistream. Therefore, the cable card receives the multiplexed broadcast signals of at least two streams, and may command the host 100 to display the received broadcast signals.

The demultiplexer 104 receives the multiplexed broadcast signal, divides the received broadcast signal into a plurality of streams, and outputs the divided streams. The decoder 105 decodes the broadcast signal, and outputs the decoded result using the video/audio signals capable of being viewed by the user's eyes.

The second tuner 101b turns a specific channel frequency from among data broadcast signals transmitted via the cable line according to the DSG (DOCSIS Settop Gateway) scheme, and can output the tuned result to the second demodulator 106. The second demodulator 106 demodulates the DSG-based data broadcast signals, and outputs the demodulated broadcast signals to the controller 110.

The receiving uni 107 turns a specific channel frequency from among the OOB-based broadcast signals, and outputs the tuned result to the cable card 200. If bi-directional communication between the cable headend and the cable broadcast receiver is available, uplink information (e.g., pay-for-use program application, and host status information) transmitted from the cable broadcast receiver to the cable headend may be transmitted to a destination according to the OOB- or DSG- scheme. Therefore, the broadcast receiver may include the switch 108 for selecting one of the above-mentioned schemes, such that desired information is transmitted to a destination according to the selected scheme.

The controller 110 of the host commands the second demodulator 106 to convert the DSG-based signal into another signal according to the network protocol. The DSG-based signal is selected by the switch 108, and is then transmitted via the cable line.

The OOB-based signal is transmitted to a cable line via the cable card by the transmitting unit 109. According to the OOB scheme, user- or status-information may be transmitted to the transmitting unit 109 via the cable card 200 and the switch 108. The transmitting unit 109 modulates the output signal of the cable card 200 into another signal according to the QPSK modulation scheme, such that the modulated signal may be transmitted to the cable headend via the cable line.

If the user's broadcast-associated signal is transmitted according to the DSG scheme, the above-mentioned information is transmitted to the transmitting unit 109 via the controller 110 and the switch 108, and the transmitting unit 109 modulates the received signal into another signal according to the QAM-16 modulation scheme, such that the modulated resultant signal may be transmitted to the cable headend via the cable line.

The DVR block 150 may include a DVR controller 151, an encryption unit 152, an interface unit 153, and a storage unit 154. The DVR block 150 can store a broadcast stream of digital content data received from the demultiplexer 104. The DVR controller 151 receives the broadcast stream from the demultiplexer 104, and the encryption unit 152 may encrypt the output signal of the DVR controller 151.

The encrypted signal may be stored in the storage unit via the interface unit 152. As can be seen from FIG. 7, it is assumed that the storage unit in the example of FIG. 7 is a Hard Disc Drive (HDD).

Upon receiving the status information request associated with the DVR function of the controller 110, the DVR controller 151 collects the DVR status information, and transmits the collected DVR status information to the controller 110. The controller 110 may collect the DVR status information received from the DVR block, or may collect operation status information of the broadcast receiver and connection status information between the broadcast receiver and other devices.

If the broadcast receiver includes the cable card 200, the controller 110 transmits the DVR status information received from the DVR controller 151 to the cable card 200. The cable card 200 may convert the DVR status information into a predetermined data structure according to the network management unit. The transmitting unit 109 can transmit the data structure to the broadcast transmission terminal.

Otherwise, if the broadcast receiver does not include the cable card 200, the controller 110 converts the DVR status information into a predetermined data structure according to the network management unit. The transmitting unit 109 may transmit the data structure to the broadcast transmission terminal. Although the host 100 has the DVR block 150 capable of performing the DVR function or is connected to an external DVR device (not shown), the cable card 200 or the controller 110 can transmit the DVR status information to a destination using the above-mentioned processes by means of the network management unit.

In the case of the SNMP scheme, the controller 110 may define status information of the SNMP-based DVR function by the MIB data. The controller 110 compiles the SMI codes shown in FIGS. 6A and 6B, and may define storage capacity information of the storage unit by the MIB data. For example, the controller 110 compiles the SMI-based MIB document, and defines storage capacity information defined in the MIB document as an object identifier (ID).

The host converts the above-mentioned information defined by the MIB data into SNMP-based information, such that the SNMP-based information is transmitted to the cable headend. For example, the host may convert data corresponding to the object ID into the SNMP-based data, such that the SNMP-based data can be transmitted to the broadcast transmission terminal. In this case, the SNMP agent may be implemented with an additional device (not shown), or the controller 110 may serve as the SNMP agent.

If the controller 110 acts as the SNMP agent, the controller 110 packetizes the object ID defined by the MIB data, converts the packetized data into other signals according to the UDP/IP scheme, and outputs the resultant signals. For example, the controller 110 packetizes data corresponding to each object ID, converts the packetized data into other signal according to the UDP/IP scheme, and outputs the resultant signals.

If the cable headend transmits an encryption algorithm, a Downloadable Conditional Access System (DCAS) 130 receives the above-mentioned encryption algorithm, and operates the received encryption algorithm. Therefore, if the DCAS 130 is contained in the host 100, the host 100 may receive cable broadcast signals without using the cable card 200.

The broadcast receiver, the method for transmitting status information, and the data structure of status information are not limited to the above-mentioned cable broadcast system, and can be applied to other bi-directional broadcast systems.

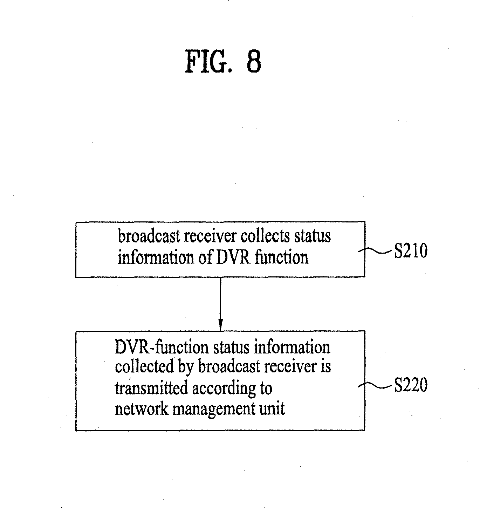

FIG. 8 is a flow chart illustrating the method for transmitting the status information of the broadcast receiver.

Referring to FIG. 8, the broadcast receiver collects status information of its DVR function or status information of other DVR functions associated with the broadcast receiver itself at step S210. If the broadcast receiver collects the status information, the broadcast receiver may be activated by the request of the broadcast transmission terminal.

The status information of the broadcast receiver may include any one of information indicating which kind of the DVR function is operated in the broadcast receiver, information indicating category information of a storage unit for the DVR function, information indicating physical status information of the storage unit for the DVR function, information indicating operation status information of the DVR function, information indicating whether content data stored by the DVR function is encrypted or not, and information indicating currently-used storage capacity of the storage unit.

If the status information to be transmitted exists or the request of the broadcast transmission terminal exists, the above-mentioned status information or the request may be defined by MIB (Management Information Base) data, resulting in the implementation of transmission/reception of the MIB data.

The broadcast receiver transmits the collected status information of the DVR function according to the network management unit at step S220.

The network management unit may be any one of a Common Management Information Protocol (CIMP), a Remote Network Monitoring (RNM), and a Simple Network Management Protocol (SNMP), etc.

The broadcast transmission terminal can transmit broadcast data or software program suitable for a corresponding function according to the DVR function of the broadcast receiver, such that the number of problems capable of being encountered by the transmission action is reduced.

As apparent from the above description, the broadcast receiver and a method for transmitting status information can pre-transmit function- or status-information of the broadcast receiver to the broadcast transmission terminal.

If the broadcast receiver has the DVR function, it can transmit status information of the host to the broadcast transmission terminal. Also, the broadcast transmission terminal can monitor the DVR function of the broadcast receiver at a remote site.

It will be apparent to those skilled in the art that various modifications and variations can be made in the present examples without departing from the spirit or scope of the inventions. Thus, it is intended that the examples covers the modifications and variations of this exmples provided they come within the scope of the appended claims and their equivalents.

## Claims

1. A method for transmitting status information of a broadcast receiver, which includes a storage unit and is connected to a network, the method comprising:
collecting the status information associated with a Digital Video Recorder (DVR) function of the storage unit; and
transmitting the collected status information according to network management means over the network.

2. The method of claim 1, wherein the network management means is one of a Common Management Information Protocol (CIMP), a Remote Network Monitoring (RMON) and a Simple Network Management Protocol (SNMP).

3. The method of claim 1, wherein the status information is information indicating which kind of the DVR function is operated in the broadcast receiver, information indicating category information of the storage unit for the DVR function, information indicating a physical status for the storage unit, information indicating a DVR operation status of the storage unit, information indicating whether digital content data stored in the storage unit is encrypted or not, and information indicating storage capacity of the storage unit.

4. The method of claim 3, wherein the information indicating which kind of the DVR function is operated in the broadcast receiver, is one of information indicating that the broadcast receiver has no DVR function, information indicating that the DVR function is an OpenCable Application Platform (OCAP) - DVR, information indicating that the DVR function is a native DVR function varying with a manufacturer of the storage unit, and information indicating that the DVR function is not defined.

5. The method of claim 3, wherein the information indicating the category information of the storage unit, is one of information indicating that the storage unit is a hard disc drive (HDD) built in the broadcast receiver, information indicating that the storage unit is an external HDD connected to the broadcast receiver, information indicating that the storage unit is a flash memory, information indicating that the storage unit is a memory stick, and information indicating that the storage unit is other type of storage not defined.

6. The method of claim 3, wherein the information indicating the physical status for the storage unit, is one of information indicating that the storage unit is out of order, information indicating that the storage unit is not formatted, information indicating that the storages unit has a bad sector, and information indicating that the storage unit does not operate.

7. The method of claim 3, wherein the information indicating the Digital Video Recorder (DVR) operation status of the storage unit, is one of information indicating a first operation in which the storage unit is recording data, information indicating a second operation in which the storage unit is operating a time shift of data, and information indicating a third operation is neither the first operation nor the second operation.

8. The method of claim 3, wherein the information indicating the storage capacity, is an usage amount or remaining amount of the storage capacity represented in percentage units or byte units.

9. The method of claim 3, wherein the status information is defined in a format of management information base (MIB).

10. A broadcast receiver comprising:
a Digital Video Recorder (DVR) block for storing at least one digital content data;
a control unit for collecting status information associated with a DVR function from the DVR block, and transforming the collected status information into a predetermined data format according to network management means; and
a transmission unit for transmitting the transformed data.

11. The broadcast receiver of claim 10, wherein the DVR block comprises:
a storage unit for storing at least one digital content data;
a DVR controller for collecting the status information associated with the storage unit; and
a interface device for connecting the DVR controller to the storage unit.

12. The broadcast receiver of claim 10, wherein the network management means is one of a Common Management Information Protocol (CIMP), a Remote Network Monitoring (RMON) and a Simple Network Management Protocol (SNMP).

13. The broadcast receiver of claim 11, wherein the status information is information indicating which kind of DVR function is operated in the broadcast receiver, information indicating category information of the storage unit, information indicating a physical status for the storage unit, information indicating a DVR operation status of the storage unit, information indicating whether digital content data stored in the storage unit is encrypted or not, and information indicating storage capacity of the storage unit.

14. The broadcast receiver of claim 13, wherein the information indicating which kind of DVR function is operated in the broadcast receiver, is one of information indicating that the broadcast receiver has no DVR function, information indicating that the DVR function is an OpenCable Application Platform (OCAP) - DVR, information indicating that the DVR function is a native DVR function varying with a manufacturer of the storage unit, and information indicating that the DVR function is not defined.

15. The broadcast receiver of claim 13, wherein the information indicating the categpry information of the storage unit, is one of information indicating that the storage unit is a hard disc drive (HDD) built in the broadcast receiver, information indicating that the storage unit is an external HDD connected to the broadcast receiver, information indicating that the storage unit is a flash memory, information indicating that the storage unit is a memory stick, and information indicating that the storage unit is other type of storage not defined.

16. The broadcast receiver of claim 13, wherein the information indicating the physical status for the storage unit, is one of information indicating that the storage unit is out of order, information indicating that the storage unit is not formatted, information indicating that the storages unit has a bad sector, and information indicating that the storage unit does not operate.

17. The broadcast receiver of claim 13, wherein the information indicating the DVR operation status of the storage unit, is one of information indicating a first operation in which the storage unit is recording data, information indicating a second operation in which the storage unit is operating a time shift of data, and information indicating a third operation is neither the first operation nor the second operation.

18. The broadcast receiver of claim 13, wherein the information indicating the storage capacity, is a usage amount or remaining amount of the storage capacity represented in percentage units and byte units.

19. The broadcast receiver of claim 13, wherein the status information is defined in a format of management information base (MIB).

20. A method for transmitting status information in a system, which includes a broadcast receiver having a storage unit connected to a broadcast transmission frontend over a network, the method comprising:
requesting, by the broadcast transmission frontend, status information associated with a Digital Video Recorder (DVR) function of the storage unit to the broadcast receiver according to a network management protocol;
collecting, by the broadcast receiver, the status information associated with a DVR function of the storage unit; and
transmitting, by the broadcast receiver, the collected status information according to network management means.
